# EUROPÄISCHE PATENTSCHRIFT

(11) **EP 0 458 115 B1**
(45) Veröffentlichungstag und Bekanntmachung des Hinweises auf die Patenterteilung: **21.07.1993**
(21) Anmeldenummer: 91107279.1
(22) Anmeldetag: 06.05.1991
(51) Int. Cl.: F02G 5/02, F02G 1/055

(54) **Vorrichtung zur Erzeugung elektrischer und Heizenergie**
Device for generating electrical and heating energy
Dispositif générateur d'énergie électrique et de chauffage

(30) Priorität: 19.05.1990 DE 4016238
(43) Veröffentlichungstag der Anmeldung: 27.11.1991
(73) Patentinhaber: STIRLING MOTORS GmbH, D-58239 Schwerte (DE)
(72) Erfinder: Herrmann, Klaus, W-5840 Schwerte (DE); Krämer, Thomas, W-6962 Adelsheim (DE)
(74) Vertreter: Patentanwälte Meinke, Dabringhaus und Partner

(56) Entgegenhaltungen:
- DE-A- 3 502 308
- DE-A- 3 519 727
- DE-A- 3 727 372
- DE-A- 3 835 469
- GB-A- 2 174 799
- PATENT ABSTRACTS OF JAPAN vol. 7, no. 89 (M-207) 13 April 1983,& JP-A-58 012943 (SANKYO DENKI) 17 Juli 1981

## Beschreibung

Die Erfindung richtet sich auf eine Vorrichtung zur Erzeugung elektrischer und Heizenergie mit einem Heizkessel mit einem Verbrennungsraum und einem dem Verbrennungsraum zugeordneten Brenner sowie mit einem mit seinem heißen Kopf in den Brennraum ragenden Stirling-Motor mit zugeordnetem Generator, wobei der den Kessel beaufschlagende Heizungsrücklauf als Zulauf für den Betriebsmittelkühler des Stirling-Motors ausgebildet ist.

Aus der DE-A-35 02 308 ist eine gattungsgemäße Vorrichtung bekannt, wobei die dortigen Konstruktionen sehr unvorteilhaft ausgebildet sind, da das stromerzeugende Aggregat einerseits und das wärmeerzeugende Aggregat andererseits im wesentlichen getrennt sind oder aber so zueinander angeordnet sind, daß die optimale Energieausbeute dort nicht erreichbar ist.

Darüber hinaus ist es auch bekannt, zur Erzeugung von Heizenergie in Haushalten, in Wohngebäuden und im Bereich der Kleinindustrie sogenannte Brennwertkessel einzusetzen. Hier sei lediglich als Beispiel auf die DE-A-37 27 372 verwiesen. Diese bekannten Brennwertkessel haben wegen der guten Wärmeausbeute und der geringen Umweltbelastung große Vorteile.

Wird elektrischer Strom benötigt, so wird im Regelfall Strom eingesetzt, der von Elektroversorgungsbetrieben über die entsprechenden Verteilernetze bezogen wird. Notstromaggregate, etwa in Krankenhäusern od. dgl., die in der Regel mit Dieselmotoren betrieben werden, sind ebenfalls bekannt oder aber auch Wind- oder Sonnenkraftanlagen in abgelegenen Bereichen, um nur einige Möglichkeiten der Stromerzeugung außerhalb der Elektroversorgungsbetriebe zu nennen.

Aufgabe der Erfindung ist die Schaffung einer Lösung, mit der unter Einsatz eines Stirling-Motors bei einer Vorrichtung zur Erzeugung auch von Heizenergie eine konstruktiv kompakte und damit insbesondere für Ein- und Mehrfamilienhäuser bzw. Kleinindustrieanlagen geeignete Lösung zur Erzeugung von elektrischem Strom und Heizenergie zu schaffen, wobei auch die Nachrüstbarkeit bereits bestehender Anlagen möglich gemacht werden soll.

Diese Aufgabe wird gemäß der Erfindung dadurch gelöst, daß der Kessel als Brennwertkessel ausgebildet ist mit einem zentrisch im oberen Bereich angeordneten Sturzbrenner, wobei der Stirling-Motor mit angeflanschtem Generator axial zum Sturzbrenner im Inneren des Kessels angeordnet ist.

Mit dieser Lösung läßt sich über den Brennwertkessel Heizenergie erzeugen und über den integrierten Stirling-Motor elektrische Energie, wobei die Flamme des Heizbrenners zur Erhitzung des im Stirling-Motors umlaufenden Arbeitsmediums dient.

Das Prinzip des Stirling-Motors ist bekannt. Hierauf kommt es vorliegend nicht an. Wesentlich ist, daß die Heizung zur Erhitzung des Arbeitsmediums und des Stirling-Motors direkt von der Brennerflamme des Brennwertkessels erfindungsgemäß zur Verfügung gestellt wird.

Mit der Erfindung ergeben sich weitere Vorteile: Zunächst, und dies ist beim Betrieb einer solchen Anlage von besonderer Bedeutung, ergibt sich durch die zentrische symmetrische Anordnung eine gleichmäßige Erhitzung des heißen Kopfes des Stirling-Motors durch die dazu symmetrisch angeordnete Flamme. Dies ist bei der Lösung nach dem Stand der Technik, soweit ein Brennraum betroffen ist, nicht möglich. Die hier propagierte Bauweise führt im übrigen zu sehr kompakten Anlagen, da das Stirling-Aggregat im Inneren des Brennwertkessels untergebracht ist. Hiermit ist auch eine Nachrüstung bereits vorhandener Anlagen ohne Probleme möglich.

Durch die Unterbringung des Motors im Inneren eines Brennwertkessels ist gleichzeitig sichergestellt, daß die gesamte Wärme des Systems nicht verlorengeht, d.h. insbesondere auch die zusätzliche Wärme durch den Betrieb des Stirling-Motors. Diese wird im Inneren des Brennwertkessels erzeugt und kann dem zu erhitzenden Wasser unmittelbar zugeführt werden. Lediglich am Rande sei bemerkt, daß natürlich durch diese Gestaltung auch ein optimaler Schallschutz gegeben ist, da sich der Motor im Inneren des Brennwertkessels befindet und daher mit der ohnehin vorgesehenen Isolierung gleich mit abisoliert ist.

Die Erfindung sieht auch eine Rauchgasführung der Rauchgase des Sturzbrenners über den Verbrennungsraum des Kessels durch einen ersten mantelseitigen Wärmeaustauscher zu einem in Schwerkraftsrichtung unteren zweiten Wärmeaustauscher vor, wobei der untere zweite Wärmeaustauscher, wie an sich bekannt, zur Vorwärmung der angesaugten Außen-Brennerzufuhrluft ausgelegt ist, dieses letzte Teilmerkmal ist für sich gesehen aus der eingangs genannten Literaturstelle bekannt.

Die Erfindung sieht auch vor, daß der Zylinderkopf des Stirling-Motors von einem Edelstahlrohr zur Umlenkung der Brennerflamme/Gase des Sturzbrenners umgeben ist. Dieses Leit- und Führungsrohr hat im wesentlichen zwei Funktionen, zum einen verlängert es die Verweildauer der Brennerflamme bzw. der heißen Gase im Bereich des Zylinderkopfes des Stirling-Motors, zum anderen wird ein derartiges Führungsrohr im Betrieb glühend, was unmittelbar zur Reduzierung der Schadstoffe im Abgas führt.

Vorteilhaft ist es, wenn der Heizungsrücklauf als Zulauf für den Betriebsmittelkühler des Stirling-Motors ausgebildet ist, da zum einen die notwendige Kühlung des Kühlers des Stirling-Motors erreicht wird, zum anderen damit unmittelbar eine Heizungswasser-Vorwärmung bewirkt wird, da nach Kühlen des Stirling-Motors wärmeres Rücklaufwasser in den Wärmeaustauscher des Brennwertkessels eingespeist wird. Diese Gestaltung ist grundsätzlich aus der DE 35 02 308-A1 bekannt.

Es hat sich gezeigt, daß vielfach die Möglichkeit besteht, bereits vorhandene Brennwertkessel mit zentrischer Innenfeuerung mit der vorliegenden Erfindung umzurüsten. Hierzu sieht die Erfindung in weiterer Ausgestaltung vor, daß der Stirling-Motor und/oder der Sturzbrenner zum nachträglichen Einbau in einen Brennwertkessel an auswechselbaren Tragplatten angeordnet ist/sind. Dabei kann in zweckmäßiger weiterer Ausgestaltung vorgesehen sein, daß die Tragplatte des Stirling-Motors im Bereich der oberen Ringscheibe des Rauchgas/Heizungswassers-Wärmeaustauschers angeordnet ist.

Erkennbar liegen weitere Vorteile in der Kombination zweier Systeme. So erreicht man mit dem Brennwertkessel alle die damit verbundenen energetischen Vorteile, d.h. die Abgase werden zum Erhitzen des Heizungswassers und zum Vorwärmen der Brennerluft bis zur Kondensation abgekühlt mit den damit verbundenen umweltfreundlichen Ergebnissen und den energetischen Vorteilen, der Stirling-Motor erzeugt elektrische Energie. Die Anlage kann ohne weiteres nur zum Betrieb der Heizung eingesetzt werden, zur gleichzeitigen Kraft/Wärmekopplung oder auch nur zum Erzeugen elektrischer Energie. Zum letzteren sieht die Erfindung vor, daß eine Umschaltmöglichkeit der Abgaszuführung vorgesehen ist, die dann nur zur Brennzufuhrluftvorwärmung herangezogen wird. Die entstehende Motorwärme des Stirling-Motors wird über Brauchwassererwärmung abgenommen.

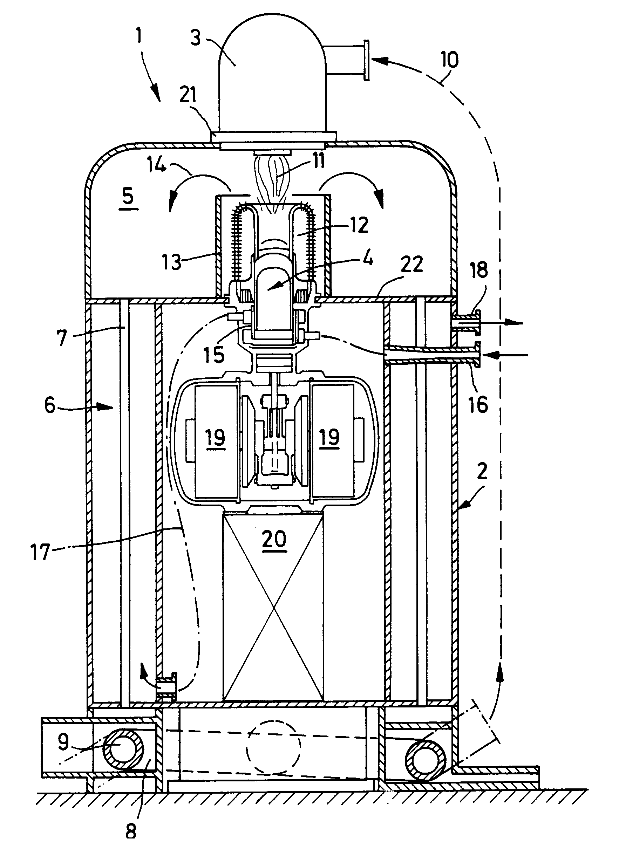

Die Erfindung ist nachstehend anhand der Zeichnung beispielsweise näher erläutert. Diese zeigt in der einzigen Figur einen Schnitt durch eine Vorrichtung nach der Erfindung als Prinzipskizze.

Die allgemein mit 1 bezeichnete Vorrichtung besteht im wesentlichen aus einem mit 2 bezeichneten Brennwertkessel mit oben aufgesetztem Sturzbrenner 3 und einem im Inneren angeordneten, allgemein mit 4 bezeichneten Stirling-Motor.

Der Brennwertkessel weist einen oberen Dom 5 zur Rauchgasfuhrung auf, einen ersten Wärmeaustauscher zwischen Rauchgasen und Warmwasser, wobei dieser Wärmeaustauscher mit 6 bezeichnet ist und über einen Ring von Wärmeaustauscherrohren 7 verfügt, die von Rauchgas durchströmt sind. Im unteren Bereich des Brennwertkessels ist ein weiterer Wärmeaustauscher 8 vorgesehen, der ein in Schwerkraftsrichtung geneigtes Ringrohr 9 zur Vorwärmung der Brennerluft beheizt, was in der Figur durch eine gestrichelte Linie 10 angedeutet ist.

Der Stirling-Motor 4 weist einen in den Dom 5 hineinragenden, unmittelbar von der Brennerflamme, die mit 11 bezeichnet ist, beheizten Zylinderkopf 12 auf, wobei der Zylinderkopf von einem Edelstahlrohrstutzen 13 umgeben ist zur Führung und Umlenkung der Brennerflamme bzw. der Rauchgase, was durch Pfeile 14 angedeutet ist.

Der Kühler des Stirling-Motors ist mit 15 bezeichnet, wobei der Eintritt des Kühlmediums das Bezugszeichen 16 trägt. Der Kühlmitteleintritt 16 ist identisch mit dem Heizungswasserrücklauf, d.h. das die Heizung verlassende, gekühlte Heizungswasser tritt dort in den Kühler ein. Über eine flexible Leitung wird dann das den Kühler 15 durchsetzende Kühlwasser dem Wärmeaustauscher 6 zugeführt, was durch eine strichpunktierte Linie dargestellt ist. Das heiße Heizungswasser verläßt die Anlage über den Rohrstutzen 18.

In der Zeichnung ist zusätzlich ein Doppelgenerator 19 des Stirling-Motors dargestellt, wobei alle elektrischen und sonstigen Steuereinrichtungen in einem Schaltelement 20 vorgesehen sein können, welches lediglich als Beispiel ebenfalls im Inneren des Brennwertkessels 2 angedeutet ist, diese Elemente können selbstverständlich außerhalb des Kessels 2 angeordnet sein.

Sowohl der Sturzbrenner 3 kann zum nachträglichen Einbau an einer Tragplatte 21 angeordnet sein, wie auch der Stirling-Motor. Die Tragplatte des Stirling-Motors ist in der Figur mit 22 bezeichnet. Sie kann gleichzeitig die obere Abdeckplatte zwischen Wärmeaustauscher 6 und Gasdom 5 der Vorrichtung bilden.

Vereinfacht beschrieben ist die Wirkungsweise die folgende:

Das Arbeitsmedium des Stirling-Motors wird im ersten Hub komprimiert, durch die Brennerflamme 11 im Zylinderkopf 12 erhitzt, so daß es expandiert und den Kolben nach unten treibt. Zur Kühlung strömt das dann heiße Arbeitsgas über einen Regenerator und Kühler, um dann erneut vom Zylinder komprimiert zu werden, so daß der nächste Arbeitstakt folgen kann. Damit können die Generatoren 19 Strom erzeugen, welcher dem Verbraucher entsprechend zugeleitet werden kann. Die Wärme wird über die über den Dom 5 geführten Rauchgase durch die Wärmeaustauscher 6 erzeugt, wobei das Warmwasser bzw. Heizungswasser gleichzeitig zur Kühlung des Arbeitsmediums des Stirling-Motors herangezogen wird.

## Patentansprüche

1. Vorrichtung zur Erzeugung elektrischer und Heizenergie mit einem Heizkessel mit einem Verbrennungsraum und einem dem Verbrennungsraum zugeordneten Brenner sowie mit einem mit seinem heißen Kopf in den Brennraum ragenden Stirling-Motor mit zugeordnetem Generator, wobei der den Kessel beaufschlagende Heizungsrücklauf als Zulauf für den Betriebsmittelkühler des Stirling-Motors ausgebildet ist,
dadurch gekennzeichnet,
daß der Kessel als Brennwertkessel (2) ausgebildet ist mit einem zentrisch im oberen Bereich angeordneten Sturzbrenner (3), wobei der Stirling-Motor (4) mit angeflanschtem Generator axial zum Sturzbrenner (3) im Inneren des Kessels (2) angeordnet ist.

2. Vorrichtung nach Anspruch 1,
gekennzeichnet durch
eine Rauchgasführung der Rauchgase des Sturzbrenners (3) über den Verbrennungsraum (5) des Kessels (2) durch einen ersten mantelseitigen Wärmeaustauscher (6) zu einem in Schwerkraftsrichtung unteren zweiten Wärmeaustauscher (8), wobei der untere zweite Wärmeaustauscher (8), wie an sich bekannt, zur Vorwärmung von angesaugter Außen-Brennerzufuhrluft ausgelegt ist.

3. Vorrichtung nach Anspruch 2,
dadurch gekennzeichnet,
daß der Zylinderkopf (9) des Stirling-Motors (4) von einem Edelstahlrohr (13) zur Umlenkung der Brennerflamme/Gase (11) des Sturzbrenners (3) umgeben ist.

4. Vorrichtung nach einem der vorangehenden Ansprüche,
dadurch gekennzeichnet,
daß der Stirling-Motor (4) und/oder der Sturzbrenner (3) zum nachträglichen Einbau in einen Brennwertkessel (2) an auswechselbaren Tragplatten (21,22) angeordnet ist/sind.

5. Vorrichtung nach einem der vorangehenden Ansprüche,
dadurch gekennzeichnet,
daß die Tragplatte (22) des Stirling-Motors im Bereich der oberen Ringscheibe des Rauchgas/Heizungswassers-Wärmeaustauschers (6) angeordnet ist.

## Claims

1. Apparatus for generating electrical and heating energy with a boiler with a combustion chamber and a burner associated with the combustion chamber and a Stirling engine which projects with its hot head into the combustion chamber, with associated generator, wherein the heating return which goes to the boiler is in the form of a feed for the working medium cooler of the Stirling engine, characterised in that the boiler is in the form of a calorific value boiler (2) with a donwardly directly bumer (3) arranged centrally in the upper region, wherein the Stirling engine (4) with flange-mounted generator is arranged axially with respect to the downwardly directed burner (3) in the interior of the boiler (2).

2. Apparatus according to claim 1 characterised by the flue gases from the downwardly directed burner (3) being guided by way of the combustion chamber (5) of the boiler (2) through a first heat exchanger (6) at a peripheral position to a second heat exchanger (8) which is a lower heat exchanger in the direction of the force of gravity, wherein the lower second heat exchanger (8), as is known per se, is designed for pre-heating of external burner feed air which is sucked in.

3. Apparatus according to claim 2 characterised in that the cylinder head (9) of the Stirling engine (4) is surrounded by a high-grade steel tube (13) for deflection of the bumer flame/gases (11) of the downwardly directed burner (3).

4. Apparatus according to one of the preceding claims characterised in that the Stirling engine (4) and/or the downwardly directed burner (3) is/are arranged on interchangeable support plates (21, 22) for subsequent fitment into a calorific value boiler (2).

5. Apparatus according to one of the preceding claims characterised in that the support plate (22) of the Stirling engine is arranged in the region of the upper annular plate member of the flue gas/heating water heat exchanger (6).

## Revendications

1. Dispositif générateur d'énergie électrique et de chauffage, comprenant une chaudière de chauffage avec une enceinte de combustion et un brûleur associé à l'enceinte de condensation ainsi qu'un moteur Stirling à générateur associé faisant saillie par sa tête chaude dans l'enceinte de condensation, la conduite de retour de chauffage qui est raccordée à la chaudière étant constituée par une conduite d'amenée pour le refroidisseur du carburant du moteur Stirling,
caractérisé en ce que la chaudière est constituée sous forme d'une chaudière à condensation (2) avec un brûleur en surplomb (3) disposé au centre de la partie supérieure, le moteur Stirling (4) étant monté, avec un générateur disposé sur ses flancs, axialement par rapport au brûleur en surplomb (3) à l'intérieur de la chaudière (2).

2. Dispositif selon la revendication 1,
caractérisé en ce que les gaz de combustion du brûleur en surplomb (3) sont envoyés par l'enceinte de combustion (5) de la chaudière (2) vers un premier échangeur de chaleur (6) situé du côté de l'enveloppe et un second échangeur de chaleur inférieur (8) en direction de la pesanteur, le second échangeur de chaleur inférieur (8) ainsi que cela est connu en soi, étant utilisé pour le préchauffage de l'air aspiré de l'extérieur vers le brûleur.

3. Dispositif selon la revendication 2,
caractérisé en ce que la tête cylindrique du moteur Stirling (4) est entourée par un tube en acier noble (13) pour faire dévier la flamme de brûleur/gaz (11) du brûleur en surplomb (3).

4. Dispositif selon l'une quelconque des revendications précédentes, caractérisé en ce que le moteur Stirling (4) et/ou le brûleur en surplomb (3) est ou sont montés sur une plaque de support échangeable (21, 22) en vue de leur montage ultérieur dans une chaudière à condensation (2).

5. Dispositif selon l'une quelconque des revendications précédentes, caractérisé en ce que la plaque de support (22) du moteur Stirling est montée dans la région du disque annulaire supérieur de l'échangeur de chaleur de gaz de combustion/eau de chauffage (6).
